Europäisches Patentamt

European Patent Office

Office européen des brevets

(11) Veröffentlichungsnummer: **0 505 931 A2**

# (12) EUROPÄISCHE PATENTANMELDUNG

(21) Anmeldenummer: **92104838.5**

(22) Anmeldetag: **20.03.92**

(51) Int. Cl.5: **G06K 7/06**

(30) Priorität: **28.03.91 DE 4110768**

(43) Veröffentlichungstag der Anmeldung:
**30.09.92 Patentblatt 92/40**

(84) Benannte Vertragsstaaten:
**AT BE CH DE DK ES FR GB GR IT LI LU MC NL PT SE**

(71) Anmelder: **HAGENUK GmbH**
**Westring 431-451, Postfach 1149**
**W-2300 Kiel 1(DE)**

(72) Erfinder: **Petersen, Henning**
**Klithagen 2, Klitgard**
**DK-9240 Nibe(DK)**

(74) Vertreter: **Kaiser, Henning**
**c/o Preussag AG, Patente und Lizenzen,**
**Karl-Wiechert-Allee 4, Postfach 61 02 09**
**W-3000 Hannover 61(DE)**

(54) **Telefon, insbesondere Funktelefon.**

(57) Die Erfindung betrifft ein Telefon, insbesondere Funktelefon, bei dem eine Berechtigungskarte benötigt wird.

Die Berechtigungskarte muß sicher gehaltert werden. Als Halterung wird der Batterieeinschub verwendet. Dazu ist eine Mulde vorgesehen, in die die Karte eingelegt und zusammen mit dem Batterieeinschub eingeschoben wird.

Fig.1

EP 0 505 931 A2

Die Erfindung betrifft ein Telefon, insbesondere Funktelefon, zu dessen Betätigung eine Berechtigungskarte, insbesondere eine Chip-Karte erforderlich ist.

Bei Funktelefonen, z. B. den sogenannten Mobiltelefonen, die als direkte Telefone ausgebildet sind, ist zur Benutzung eine Berechtigungskarte notwendig, die die Berechtigung des Teilnehmers in codierter Form enthält.

Zum Nachweis der Berechtigung werden vorzugsweise Chip-Karten verwendet, bei denen über geeignete Kontakte von dem Mobiltelefon Informationen aus der Karte übernommen oder in diese abgespeichert werden können. Hierzu muß die Karte mit ihren Kontakten relativ zu den Kontakten des Mobiltelefons richtig gehalten werden.

Als Halterung wurden z. B. in EP 0 276 403 A2 Einrichtungen vorgeschlagen, bei denen die Karte entweder in einer doppelwandigen hohlen Klappe untergebracht wird, die außen am mobilen Telefon angebracht ist und nach Einführen der Karte in eine im mobilen Telefon vorgesehenen wannenartigen Ausnehmung oder Mulde eingeklappt werden. Eine andere Ausführung der genannten Schrift sieht eine außen am mobilen Telefon angebrachte Mulde vor, in die die Karte eingelegt und mit einem klappbaren Deckel abgedeckt wird. Dabei sind bei der außen am Mobiltelefon angebrachten Mulde in deren Boden andrückbare Kontaktelemente vorgesehen, und ein Deckel dient als Halterungselement. Der Deckel wird mit federnd lösbaren Rasteinrichtungen verschlossen gehalten.

Beide Ausführungen erfordern zur verdeckten Halterung der Chip-Karte eine Abdeckklappe mit entsprechendem Scharnier und Rasteinrichtungen, die außen am Gerät angebracht sind.

Diese Gestaltung kann als fertigungstechnisch ungünstig angesehen werden. Darüber hinaus können die beweglichen Teile, wie Klappe und Rasteinrichtungen, bei mechanischer Belastung relativ leicht beschädigt werden. Die vorgesehenen Einrichtungen entsprechen ferner nicht den gestiegenen Anforderungen eines modernen Designs. Aufgabe der Erfindung war es daher, die Gestaltung eines Mobiltelefons anzugeben, in dem eine sichere Lagerung der Chip-Karte ohne fertigungstechnisch aufwendige Abdeck- und Rasteinrichtungen ermöglicht wird, ohne daß die Karte oder die Kartenhalterung von außen sichtbar sind.

Die erfindungsgemäße Lösung dieser Aufgabe sieht vor, die Aufnahmevorrichtung für die Karte als Mulde in der Stromversorgungseinheit des Mobiltelefons anzubringen. Die Mulde soll dabei eine im wesentlichen der Kartendicke entsprechende Tiefe aufweisen und in ihrer Form der Chip-Karte paßgenau angepaßt sein. Dadurch ist einerseits gewährleistet, daß die Karte beim Betrieb des Mobiltelefons sicher im Inneren des Gerätes untergebracht ist. Andererseits kann nach Herausnehmen der Stromversorgungseinheit die Karte einfach entnommen werden. Diese erfinderische Lösung kann mit einem Minimum an beweglichen Teilen auskommen, die zudem auf häufiges Herausnehmen und Einlegen von vornherein (zum Zwecke der Aufladung der Stromversorgungseinheit) ausgelegt sind. Diese erfinderische Lösung ist Gegenstand des kennzeichnenden Teils des Anspruchs 1. Die Ansprüche 2 bis 11 geben zweckmäßige Weiterbildungen der erfinderischen Lösung nach Anspruch 1 an.

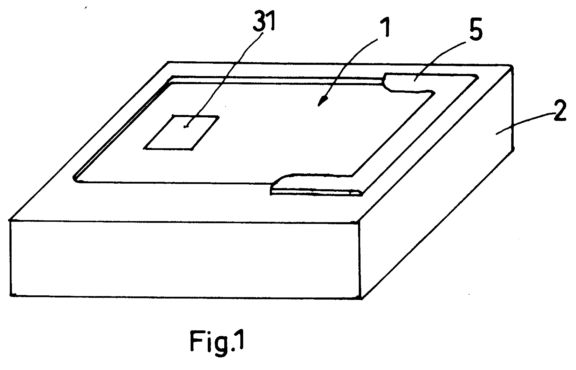

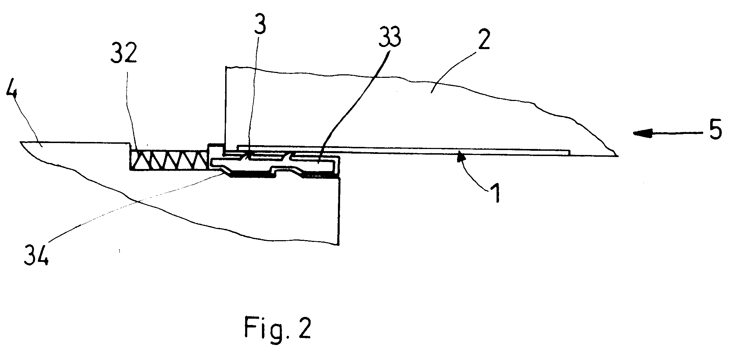

Einzelheiten der erfinderischen Lösung werden anhand von in den Figuren 1 und 2 dargestellten Ausführungsbeispielen erläutert.

Es zeigen in schematischer Darstellung:

Figur 1       eine perspektivische Ansicht einer aus einem Mobiltelefon herausgenommenen Stromversorgungseinheit,

Figur 2       Ausschnitte eines Längsschnittes durch ein Mobiltelefon.

In Figur 1 ist eine Mulde 1 in einer Stromversorgungseinheit 2 des Funktelefons angebracht. Die Mulde 1 weist eine Tiefe auf, die im wesentlichen der Kartendicke entspricht. Die Form der Mulde 1 in einer zum Boden der Mulde bzw. der Ebene der Chip-Karte parallelen Schnittfläche entspricht paßgenau der Schnittfläche der Chip-Karte dieser Ebene. Nach einer der bevorzugten Ausführungen sind die andrückbaren Kontaktelemente 31 zur Kontaktierung der Chip-Karte im Boden der Mulde 1 angeordnet. Die Chip-Karte kann dann einfach in die Mulde eingelegt werden, beim Einschieben der Stromversorgungseinheit in das Mobiltelefon manuell gegen die Kontakte angedrückt werden und durch entsprechende Andrückeinrichtungen im Inneren des Telefons nach Einschieben der Stromversorgungseinheit in sicher kontaktierender Weise gehalten werden.

Soweit zweckmäßig, kann zusätzlich eine Halterung der Chip-Karte an einem Chip-Kartenende vorgesehen sein, etwa in Form von schienenartigen Halterungselementen 5, die die Karte auch bei herausgenommener Stromversorgungseinheit gegen ein Herausfallen aus der Mulde sichern. Dabei können die Schienen 5 zweckmäßig zur seitlichen Führung der Stromversorgungseinheit beim Einschieben in das Mobiltelefon dienen. Durch die Länge der Schienen 5 im Verhältnis zur Länge der Chip-Karte und eine geeignete Formgebung der Schienen an dem gehalterten Chip-Kartenende in Verbindung mit einer geeigneten Formgebung des Bodens der Mulde an diesem Ende kann durch die Elastizität der Chip-Karte die erforderliche Andrückkraft zwischen Kontakten und Chip-Karten eingestellt werden.

In einer anderen nicht dargestellten Ausführung mit Kontaktelementen 31 im Boden der Mulde kann die Mulde so ausgeführt sein, daß die Muldenöffnung im wesentlichen der Form einer der Schmalseiten der Chip-Karte entspricht. Unter Schmalseiten der Chip-Karte soll hier ein Schnitt in einer zur Chip-Kartenebene senkrechten Schnittebene verstanden werden. Bei dieser Ausführung kann die Chip-Karte etwas über den Rand der Stromversorgungseinheit hinaus ragen. Bei beiden vorgenannten Ausführungen sind an der Stromversorgungseinheit Kontakte vorgesehen, die die Verbindung zwischen den andrückbaren Kontaktelementen im Boden der Mulde und dem Inneren des Mobiltelefons herstellen.

In Figur 2 ist ein Ausführungsbeispiel dargestellt, bei dem die andrückbaren Kontaktelemente 3 im Inneren des Telefons 4 an einer der Stromversorgungseinheit zugewandten Fläche angeordnet sind. Die andrückbaren Kontaktelemente 3 sind in Einführungsrichtung 5 der Chip-Karte bzw. der Stromversorgungseinheit bewegbar. Eine Feder 32 sorgt dafür, daß nach Herausnehmen der Stromversorgungseinheit die andrückbaren Kontaktelemente 3 in eine definierte Ausgangslage gebracht werden. Mit dem Einschieben der Stromversorgungseinheit in Einschubrichtung 5 wird ein Träger 33 der andrückbaren Kontaktelemente 3 in Einschubrichtung bewegt und z. B. auf einer schiefen Ebene 34 senkrecht zur Chip-Kartenebene auf die dort angeordneten Kontakte zubewegt. Hierdurch wird ein Schleifen der andrückbaren Kontakte 3 auf den Kontaktierungsflächen der Chip-Karte vermieden.

Bei einer nicht dargestellten Ausführung mit Kontaktelementen 3 im Innern des Telefons 4 kann die Muldenöffnung im wesentlichen der Form der Schmalseite der Karte entsprechen, wobei die Chip-Karte dann soweit über die Mulde hinausragt, daß der Träger 33 mit den andrückbaren Kontakten 3 durch eine Schmalseite der Chip-Karte betätigt wird und eine einwandfreie Kontaktierung der Chip-Karte gewährleistet ist.

Soweit die Chip-Karte mit ihren Schmalseiten vollständig in die Mulde eingebettet ist, wird in einer der die Tiefe der Mulde bildenden Wände eine Ausnehmung zum Heraushebeln der Chip-Karte vorgesehen.

**Patentansprüche**

1. Telefon, insbesondere Funktelefon, zu dessen Betätigung eine Berechtigungskarte, insbesondere eine mit Kontakten versehene Chip-Karte notwendig ist, mit an die Chip-Karte andrückbaren Kontaktelementen, mit Halterungselementen für die Chip-Karte und einer die Chip-Karte aufnehmenden Mulde, dadurch gekennzeichnet, daß die Mulde (1)

a) in der Stromversorgungseinheit (2) des Funktelefons angebracht ist,
b) eine im wesentlichen der Kartendicke entsprechende Tiefe aufweist und
c) eine der Form der Chip-Karte paßgenau entsprechende Formgebung aufweist.

2. Telefon nach Anspruch 1, dadurch gekennzeichnet, daß die andrückbaren Kontaktelemente (3) im Telefon (4) an der der Stromversorgungseinheit zugewandten Fläche angeordnet sind.

3. Telefon nach Anspruch 2, dadurch gekennzeichnet, daß die andrückbaren Kontaktelemente (3) in Einführungsrichtung (5) der Chip-Karte bewegbar sind.

4. Telefon nach Anspruch 3, dadurch gekennzeichnet, daß die andrückbaren Kontaktelemente (3) senkrecht zur Chip-Kartenebene bewegbar sind.

5. Telefon nach Anspruch 1, dadurch gekennzeichnet, daß die andrückbaren Kontaktelemente (31) in der Mulde (1) angeordnet sind.

6. Telefon nach Anspruch 5, dadurch gekennzeichnet, daß an der der Kontaktseite der Chip-Karte gegenüberliegenden Seite der Chip-Karte Halterungselemente (5) angeordnet sind.

7. Telefon nach Anspruch 6, dadurch gekennzeichnet, daß die Halterungselemente (5) zum Andrücken der Karte gegen die Kontaktelemente ausgebildet sind.

8. Telefon nach Anspruch 7, dadurch gekennzeichnet, daß die Halterungselemente zum Andrücken der Karte gegen die Kontakte an der Stromversorgungseinheit (2) angeordnet sind.

9. Telefon nach Anspruch 7, dadurch gekennzeichnet, daß die Halterungselemente zum Andrücken der Chip-Karte gegen die Kontakte an einer der Stromversorgungseinheit mit Chip-Karte zugewandten Fläche im Inneren des Telefons angeordnet sind.

10. Telefon nach einem oder mehreren der Ansprüche 1 bis 9, dadurch gekennzeichnet, daß die Muldenöffnung im wesentlichen der Form der Chip-Karte in der Chip-Kartenebene entspricht.

11. Telefon nach einem oder mehreren der Ansprüche 1 bis 9, dadurch gekennzeichnet, daß die Muldenöffnung im wesentlichen der Form der Chip-Karte in einer zur Chip-Kartenebene senkrechten Schnittebene entspricht.

Fig.1

Fig. 2

EP 0 505 931 A2